(19) Europäisches Patentamt
European Patent Office
Office européen des brevets

(11) **EP 4 167 467 A1**

(12) **DEMANDE DE BREVET EUROPEEN**

(43) Date de publication:
**19.04.2023 Bulletin 2023/16**

(21) Numéro de dépôt: **22201005.0**

(22) Date de dépôt: **12.10.2022**

(51) Classification Internationale des Brevets (IPC):
**H02P 3/08** (2006.01)

(52) Classification Coopérative des Brevets (CPC):
**H02P 3/08**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **14.10.2021 FR 2110931**

(71) Demandeur: **Delta Dore**
**35270 Bonnemain (FR)**

(72) Inventeurs:
• **PIHUIT, Jean-Philippe**
  **35270 BONNEMAIN (FR)**
• **CHABANNES, André**
  **35270 BONNEMAIN (FR)**

(74) Mandataire: **Cabinet Le Guen Maillet**
**3, impasse de la Vigie**
**CS 71840**
**35418 Saint-Malo Cedex (FR)**

(54) **DISPOSITIF ET PROCEDE DE REGULATION DE LA VITESSE D'UN MOTEUR SANS BALAI A COURANT CONTINU**

(57) Procédé de régulation de la vitesse d'un moteur, le moteur étant un moteur sans balai à courant continu et comportant un stator et un rotor, le moteur étant destiné à entraîner en montée et en descente une charge. Le procédé est implémenté par une unité de contrôle du moteur et comporte, lorsqu'un phénomène de charge entraînante est détecté, d'effectuer un freinage en appliquant (406) un décalage angulaire sur le champ magnétique du stator par rapport à une orientation du champ magnétique du stator optimale correspondant à la position angulaire courante du rotor, le décalage angulaire étant appliqué avec un sens opposé au sens de rotation du moteur.

Fig. 4

## Description

DOMAINE TECHNIQUE

La présente invention concerne le domaine des moteurs à courant continu sans balai et concerne plus particulièrement un procédé destiné à réguler la vitesse du moteur lorsque le moteur est entraîné par un objet.

ETAT DE LA TECHNIQUE ANTERIEURE

Les moteurs à courant continu sans balai ou moteurs BLDC (pour « brushless direct current » en anglais) génèrent plus de puissance et sont plus efficaces que les moteurs à courant continu à balais conventionnels de taille similaire. Un tel moteur comporte un stator comprenant des bobines alimentées de manière séquentielle, et comporte un rotor comprenant au moins un aimant permanent. L'utilisation de moteurs alimentés par batterie est aujourd'hui courante. Les moteurs BLDC en font partie.

Il est parfois nécessaire de réguler la vitesse d'un moteur BLDC, et notamment dans le cas où une charge mécanique susceptible d'être entraînée par le moteur BLDC devient entraînante. C'est alors la charge mécanique qui entraîne le moteur BLDC et non l'inverse, ce qui génère un risque d'endommagement des composants électroniques du moteur en raison d'une augmentation de la tension aux bornes du moteur devenu générateur. Un phénomène de charge entraînante risque en outre d'endommager la charge mécanique qui est par exemple un volet.

Diverses méthodes de freinage de moteurs BLDC sont connues.

Par exemple, une première méthode de freinage implique d'injecter un courant de freinage dans le moteur. Or, une telle méthode nécessite une consommation de courant élevée, ce qui n'est pas écologique. Ceci est aussi le cas d'une alimentation par batterie puisque l'injection d'un courant de freinage entraîne un risque de décharge rapide de la batterie et donc une impossibilité de faire fonctionner le moteur.

Lorsque la charge mécanique est entraînante, une autre méthode de freinage implique de faire débiter un courant depuis le moteur vers la source d'alimentation, ce qui permet de freiner le moteur tout en récupérant de l'énergie. Cependant, le débit de courant est impossible vers une batterie entièrement chargée. Une telle méthode de freinage est donc incompatible à une alimentation par batterie ou n'est pas écologique.

Une troisième méthode consiste à remplacer la source d'alimentation du moteur BLDC par une résistance au moment où un freinage du moteur est souhaité, à l'aide par exemple d'un système électronique. Toutefois, la taille de la résistance nécessaire est généralement trop grande par rapport au volume du moteur et la chaleur produite est trop importante pour être aisément dissipée sans nuire au fonctionnement du moteur.

Dans certains cas, le freinage du moteur est obtenu grâce à une mise en court-circuit des bobines du stator de manière cyclique. Cependant, une telle méthode de freinage nécessite un surdimensionnement des transistors d'alimentation des bobines, est susceptible d'engendrer du bruit et ne permet pas un contrôle optimal du freinage.

Il est alors souhaitable de pallier ces inconvénients de l'état de la technique.

Il est notamment souhaitable de fournir une solution qui permette d'effectuer un freinage du moteur tout en étant compatible avec une alimentation par batterie.

Il est en outre souhaitable de fournir une solution qui permette de contrôler le freinage avec précision et de réguler la vitesse.

Il est enfin souhaitable de fournir une solution compacte, peu bruyante et qui dissipe peu de chaleur.

EXPOSE DE L'INVENTION

Un objet de la présente invention est de proposer un procédé de régulation de la vitesse d'un moteur, le moteur étant un moteur sans balai à courant continu et comportant un stator et un rotor, le moteur étant destiné à entraîner en montée et en descente une charge. Le procédé est implémenté par une unité de contrôle du moteur et comporte, lorsqu'un phénomène de charge entraînante est détecté, d'effectuer un freinage en appliquant un décalage angulaire sur le champ magnétique du stator par rapport à une orientation du champ magnétique du stator optimale correspondant à la position angulaire courante du rotor, le décalage angulaire étant appliqué avec un sens opposé au sens de rotation du moteur.

Ainsi, il est possible d'effectuer un freinage du moteur écologique ou compatible avec une alimentation par batterie du moteur. En outre, le freinage est silencieux, dissipe peu de chaleur et est aisément implémenté dans une solution matérielle compacte.

Selon un mode de réalisation particulier, le procédé comporte un mode ralentisseur pouvant être alternativement activé et désactivé, le mode ralentisseur étant activé dès qu'un phénomène de charge entraînante est détecté. Le procédé comporte en outre, lorsque le mode ralentisseur est désactivé, les étapes de : déterminer une vitesse réelle du moteur ; déterminer si le moteur est dans une phase d'accélération ou dans une phase de régulation ; détecter le phénomène de charge entraînante si le rapport de la vitesse réelle sur une vitesse théorique est supérieur à un premier seuil prédéterminé lorsque le moteur est dans une phase d'accélération ; et détecter le phénomène de charge entraînante si la vitesse réelle est supérieure à une vitesse de consigne et si le rapport d'une tension d'alimentation moyenne réelle sur une tension d'alimentation moyenne théorique est inférieur à un deuxième seuil prédéterminé lorsque le moteur est dans une phase de régulation.

Ainsi, il est possible de déclencher un freinage lorsque la charge destinée à être entraînée par le moteur devient entraînante.

Selon un mode de réalisation, le décalage angulaire appliqué est égal à une valeur angulaire initiale prédéterminée au moment où le mode ralentisseur est activé et le procédé comporte en outre, lorsque le mode ralentisseur est activé, des étapes de : déterminer un écart de vitesse égal à la différence entre une vitesse de consigne et la vitesse réelle ; déterminer une valeur de correction égale à l'écart de vitesse divisé par un coefficient prédéterminé si la valeur absolue de l'écart de vitesse est supérieure à un seuil de vitesse prédéterminé ; et appliquer un nouveau décalage angulaire calculé en ajoutant la valeur de correction au décalage angulaire précédent et limité en valeur absolue à une valeur angulaire maximale prédéterminée.

Ainsi, il est possible de contrôler précisément le freinage appliqué et de réguler la vitesse du moteur pendant le freinage.

Selon un mode de réalisation particulier, la vitesse réelle est déterminée périodiquement avec une période de durée prédéterminée, et le procédé comporte en outre, lorsque le mode ralentisseur est activé : enregistrer, pour chaque vitesse réelle déterminée, une valeur du décalage angulaire appliqué ; enregistrer chaque valeur de décalage angulaire appliqué en association avec les n valeurs précédemment enregistrées des décalages angulaires appliqués, *n* étant un premier nombre prédéterminé, de sorte à constituer un ensemble de *n+1* valeurs ; calculer, pour chaque ensemble de *n+1* valeurs, une variation de décalage égale à la valeur absolue de la différence entre la somme des valeurs absolues des *m* décalages angulaires les plus anciens de l'ensemble des *n+1* valeurs et la somme des valeurs absolues des *m* décalages angulaires les plus récents de l'ensemble des *n+1* valeurs, *m* étant un second nombre prédéterminé tel que $m < n/2$ ; et arrêter l'application d'un décalage angulaire et désactiver le mode ralentisseur lorsque la variation de décalage est supérieure à un seuil de fin d'entraînement.

Ainsi, le freinage est aisément arrêté lorsque la charge n'est plus entraînante.

Selon un mode de réalisation particulier, le seuil de fin d'entraînement Sfe est égal à : *Sfe = arrondi(U - Ui) + β*, où U est une valeur de tension nominale de l'alimentation électrique du moteur, Ui est une valeur de tension d'alimentation mesurée préalablement au démarrage du moteur, et *β* est un angle prédéterminé.

Selon un mode de réalisation particulier, le procédé comporte en outre d'arrêter l'application du décalage angulaire et de désactiver le mode ralentisseur si un ordre d'arrêt est reçu par le moteur.

Ainsi, il est possible de passer aisément d'une méthode de freinage adaptée à la régulation de la vitesse lorsqu'une charge est entraînante à une phase d'arrêt du moteur pour laquelle la vitesse de consigne est nulle.

L'invention concerne également un dispositif de régulation de la vitesse d'un moteur sans balai à courant continu, le moteur comportant un stator et un rotor, le moteur étant destiné à entraîner en montée et en descente une charge. Le dispositif comporte des moyens pour effectuer un freinage en appliquant un décalage angulaire sur le champ magnétique du stator par rapport à une orientation du champ magnétique du stator optimale correspondant à la position angulaire du rotor avec un sens opposé au sens de rotation du moteur lorsqu'un phénomène de charge entraînante est détecté.

Selon un mode de réalisation particulier, le dispositif de régulation comporte en outre : des moyens pour activer et désactiver alternativement un mode ralentisseur, le mode ralentisseur étant activé dès qu'un phénomène de charge entraînante est détecté ; des moyens pour déterminer une vitesse réelle du moteur ; des moyens pour déterminer si le moteur est dans une phase d'accélération ou dans une phase de régulation ; des moyens pour détecter le phénomène de charge entraînante, lorsque le mode ralentisseur est désactivé, si le rapport de la vitesse réelle sur une vitesse théorique est supérieur à un premier seuil prédéterminé lorsque le moteur est dans une phase d'accélération ; et des moyens pour détecter le phénomène de charge entraînante, lorsque le mode ralentisseur est désactivé, si la vitesse réelle est supérieure à une vitesse de consigne et si le rapport d'une tension d'alimentation moyenne réelle sur une tension d'alimentation moyenne théorique est inférieur à un deuxième seuil prédéterminé lorsque le moteur est dans une phase de régulation.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. L'invention concerne également un support de stockage d'informations stockant un tel programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un dispositif d'obturation motorisé d'une baie ;

[Fig. 2] illustre schématiquement un exemple d'architecture matérielle d'une unité de contrôle d'un moteur sans balai à courant continu ;

[Fig. 3] illustre schématiquement un procédé de régulation de la vitesse du moteur dans un mode standard ; et

[Fig. 4] illustre schématiquement le procédé de régulation de la vitesse du moteur dans un mode ralentisseur.

EXPOSE DETAILLE DE MODES DE REALISATION

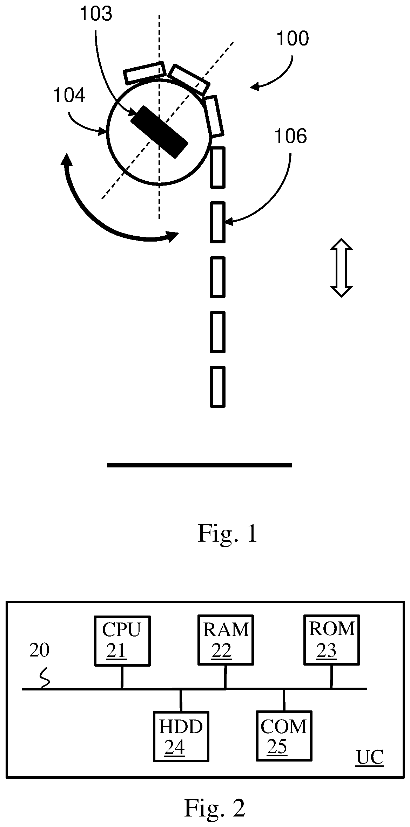

La Fig. 1 montre un dispositif d'obturation motorisé d'une baie 100 qui est destiné à venir s'installer dans un coffre de volet d'un bâtiment au-dessus de la baie à obturer. Le dispositif d'obturation motorisé 100 comprend :

- une charge telle qu'un tablier ou volet roulant 106, et,

- des moyens d'entraînement constitués d'un tube moteur 103 et d'un tube d'enroulement 104 et destinés à entraîner en montée et en descente le tablier ou volet roulant 106.

Le tube moteur 103 est par exemple coaxial avec le tube d'enroulement 104 et il est disposé à l'intérieur de celui-ci. La fixation du tablier ou volet roulant 106 sur le tube d'enroulement 104 s'effectue à l'aide d'un dispositif de verrouillage souple ou rigide. Le tube d'enroulement 104 est entraîné en rotation par le tube moteur 103 et entraîne alors la montée ou la descente du tablier ou volet roulant 106 selon que le sens de rotation du tube d'enroulement 104 génère l'enroulement ou le déroulement du tablier ou volet roulant 106 autour du tube d'enroulement 104.

Généralement, le tablier ou volet roulant 106 est constitué de lattes fixées les unes aux autres de manière à présenter un espace entre elles.

Le moteur est alimenté par une alimentation électrique obtenue à partir d'un réseau de fourniture électrique d'un bâtiment dans lequel est situé le moteur ou par une batterie.

La tension nominale délivrée par l'alimentation électrique est par exemple égale à 6, 12, 18 ou 24 Volts.

Le moteur 103 comporte un stator comprenant des bobines et comporte un rotor comprenant au moins un aimant permanent. Par exemple, le stator comporte trois bobines et le rotor comporte une série d'aimants comprenant six pôles. Les bobines du stator sont alimentées de manière séquentielle de sorte à générer un champ magnétique induit tournant. Le rotor est alors entraîné en rotation en raison du couplage entre le champ magnétique induit tournant du stator et le champ magnétique généré par l'aimant permanent du rotor. Selon un mode de réalisation particulier, le moteur 103 est destiné à entraîner un mouvement d'une charge telle que le tablier 106, ou volet roulant, et permet ainsi d'ouvrir et de fermer le tablier ou volet roulant 106.

Le moteur 103 est contrôlé par un contrôleur qui permet de commuter électroniquement l'alimentation de chaque bobine en tenant compte, à chaque instant, de la position angulaire du rotor. Ainsi, l'alimentation des bobines peut être effectuée de manière optimale pour obtenir une rotation souhaitée du rotor. Le contrôleur peut suivre un schéma de contrôle trapézoïdal comportant six configurations d'alimentation des bobines exécutées séquentiellement. Les six configurations entraînent la rotation du moteur d'un secteur angulaire prédéfini lorsqu'elles sont exécutées successivement. Selon un mode de réalisation particulier, l'exécution de la séquence des six configurations d'alimentation entraîne une rotation partielle du rotor d'un secteur angulaire de 120° et ladite séquence est répétée à trois reprises par tour du moteur. A chaque configuration d'alimentation est associé un domaine angulaire du rotor dans chaque secteur angulaire, ledit domaine angulaire étant distinct des domaines angulaires associés aux autres configurations d'alimentation dans ledit secteur. Par exemple, pour un moteur comportant trois secteurs angulaires de 120°, chaque configuration d'alimentation est associée à un domaine angulaire d'un angle de 20° dans chacun des secteurs angulaires.

Selon un mode de réalisation, le moteur 103 est alimenté par une batterie générant une tension d'alimentation nominale. En outre, le contrôleur génère un signal de modulation de largeur d'impulsion MLI (ou PWM pour « Pulse Width Modulation » en anglais) comportant une alternance périodique entre un premier état discret ayant une valeur de tension maximale égale à la tension d'alimentation continue du moteur et un second état discret ayant une valeur de tension minimale nulle. La fréquence du signal MLI est fixe tandis que le rapport de durée entre le premier état discret et le second état discret varie et est appelé rapport cyclique. Lorsque le rapport cyclique du signal MLI est de 0%, la tension d'alimentation moyenne du moteur est nulle et lorsque le rapport cyclique du signal MLI est de 100%, la tension d'alimentation moyenne du moteur est égale à la tension nominale à l'entrée du moteur. Le signal MLI permet ainsi de faire varier la tension moyenne d'alimentation du moteur en modifiant le rapport cyclique.

Le moteur 103 comporte en outre une unité de contrôle UC utilisée pour détecter un phénomène de charge entraînante. Un tel phénomène de charge entraînante peut se produire par exemple lorsque la rotation du moteur, destinée à entraîner le tablier ou volet roulant 106 dans un mouvement de descente, se trouve entraîné par le mouvement du tablier ou volet roulant 106 en raison de son poids et de sa vitesse. C'est alors le tablier ou volet roulant 106 qui entraîne le moteur et non l'inverse.

La Fig. 2 illustre schématiquement un exemple d'architecture matérielle d'une unité de contrôle UC du moteur 103. L'unité de contrôle UC comporte alors, reliés par un bus de communication 20 : un processeur ou CPU (« Central Processing Unit » en anglais) 21 ; une mémoire vive RAM (« Random Access Memory » en anglais) 22 ; une mémoire morte ROM (« Read Only Memory » en anglais) 23 ; une unité de stockage ou un lecteur de support de stockage, tel qu'un disque dur HDD (« Hard Disk Drive » en anglais) 24 ; et une interface de communication 25 permettant de communiquer avec d'autres éléments du moteur tels qu'un capteur de vitesse ou un contrôleur de l'alimentation des bobines ou un organe de réception d'ordres de commandes extérieurs. Selon un exemple de réalisation, la mémoire vive RAM 22 et la mémoire morte ROM 23 sont implémentées par des mémoires de type flash à technologie rapide.

Le processeur 21 est capable d'exécuter des instructions chargées dans la RAM 22 à partir de la ROM 23, d'une mémoire externe (non représentée), d'un support de stockage, ou d'un réseau de communication. Lorsque l'unité de contrôle UC est mise sous tension, le processeur 21 est capable de lire de la RAM 22 des instructions et de les exécuter. Ces instructions forment un programme d'ordinateur causant l'implémentation, par le processeur 21, de tout ou partie des algorithmes et étapes décrits ici en relation avec l'unité de contrôle.

Ainsi, tout ou partie des algorithmes et étapes décrits en relation avec l'unité de contrôle UC du moteur peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

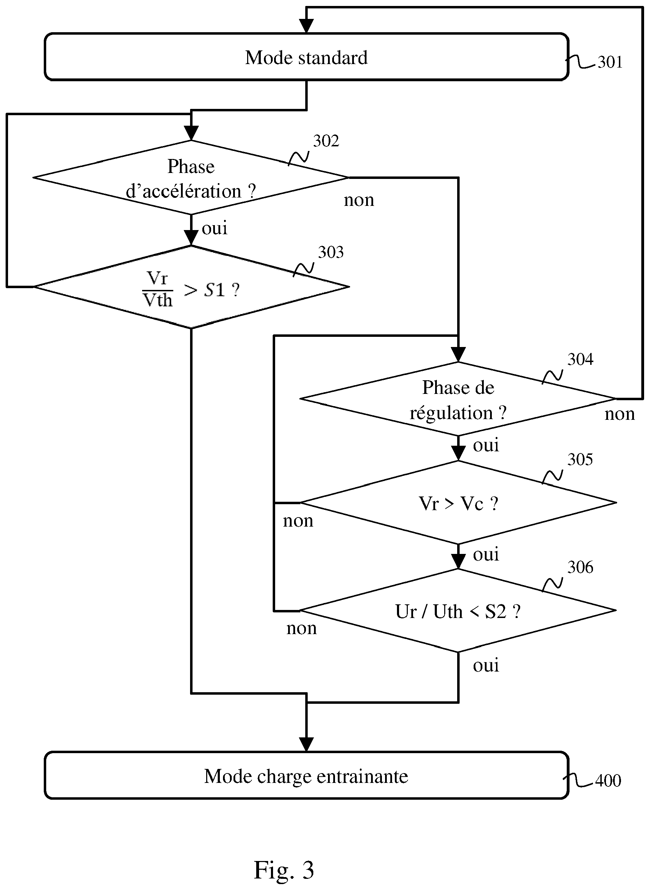

La Fig. 3 illustre schématiquement un procédé de régulation de la vitesse du moteur 103 dans un mode standard. Le procédé de régulation est implémenté par l'unité de contrôle UC du moteur.

Dans une première étape 301, l'unité de contrôle UC du moteur se trouve dans le mode standard, autrement dit, un mode ralentisseur est désactivé. Dans le mode standard, l'alimentation des bobines du stator est effectuée en tenant compte à chaque instant de la position angulaire du rotor afin d'optimiser l'orientation du champ magnétique induit pour obtenir la rotation du rotor. Autrement dit, chaque configuration d'alimentation est exécutée lors de la rotation du rotor lorsque la position angulaire du rotor se trouve précisément dans un domaine angulaire associé à ladite configuration d'alimentation.

En outre, les bobines sont alimentées avec une tension moyenne d'alimentation de sorte que le rotor tourne à une vitesse à atteindre dite vitesse de consigne Vc. Le moteur est capable à tout instant de déterminer une vitesse réelle Vr du moteur. La vitesse réelle Vr du moteur peut être mesurée à l'aide d'un capteur logique tel qu'un capteur logique tout ou rien mesurant les variations d'un champ magnétique généré par un aimant situé en bout d'arbre du moteur et comportant deux pôles. Ledit aimant entraîne ainsi un changement d'état détecté par le capteur logique à chaque demi-tour du moteur. La vitesse réelle Vr est régulée par un asservissement qui a pour rôle d'augmenter, respectivement de diminuer, la tension moyenne d'alimentation lorsque la vitesse réelle Vr est inférieure, respectivement supérieure, à la vitesse de consigne Vc. La tension d'alimentation moyenne peut être modifiée en faisant varier le rapport cyclique du signal MLI.

Dans le mode standard, l'unité de contrôle UC du moteur cherche à détecter un phénomène de charge entraînante.

Dans une étape 302 suivante, l'unité de contrôle détermine si le moteur se trouve dans une phase d'accélération. Par exemple, l'unité de contrôle détermine que le moteur se trouve dans une phase d'accélération après qu'un ordre de démarrage ou d'augmentation de la vitesse de consigne Vc est reçu par le moteur, et tant que la phase d'accélération n'est pas terminée. Une phase d'accélération se termine lorsqu'une phase de régulation débute, autrement dit au moment où la vitesse réelle Vr atteint la vitesse de consigne Vc, ou alors lorsqu'un ordre d'arrêt est reçu. Si le moteur se trouve dans une phase d'accélération, une étape 303 est effectuée. Sinon, une étape 304 est effectuée.

A l'étape 303, l'unité de contrôle détermine si le rapport de la vitesse réelle Vr du moteur et de la vitesse théorique Vth est supérieur à un premier seuil prédéterminé S1, tel que $S1 = 1,2$. Pour cela, l'unité de contrôle détermine la vitesse réelle Vr à un instant t présent, par exemple en envoyant un ordre de mesure à un capteur de vitesse. Selon un mode de réalisation, la vitesse réelle Vr est déterminée périodiquement. Chaque nouvelle valeur de la vitesse réelle Vr est ainsi déterminée après écoulement d'un délai prédéterminé d'une durée prédéterminée $\Delta t$ à compter d'une précédente détermination de la vitesse réelle Vr. Par exemple, la vitesse réelle Vr est déterminée toutes les 100 ms.

En outre, la vitesse théorique Vth est calculée en considérant une progression prédéfinie de la vitesse en fonction du temps entre un instant initial t0 de la phase d'accélération, auquel la vitesse initiale est définie, et un instant final tf de la phase d'accélération auquel la vitesse de consigne Vc est supposée être atteinte. L'unité de contrôle compare ainsi la vitesse réelle Vr, mesurée à l'instant t, à la vitesse théorique Vth calculée à l'instant t-t0.

Selon un exemple de réalisation, la vitesse théorique Vth est augmentée, lors de la phase d'accélération, d'un pas de vitesse prédéterminé à chaque intervalle de temps d'une durée prédéfinie. Par exemple, la vitesse est augmentée de 150 tours/min toutes les 50 ms. Le pas de vitesse prédéterminé peut être calculé en multipliant la vitesse nominale du moteur, définie pour une tension d'alimentation nominale, par exemple à 12V, par un facteur prédéterminé. Par exemple, pour une vitesse nominale de 3000 tours/min à 12 V et un facteur prédéterminé de 5% déterminé de manière empirique au moyen d'essais fonctionnels, le pas de vitesse prédéterminé est de 150 tours/min. Si le rapport de la vitesse réelle Vr sur la vitesse théorique Vth est supérieur au premier seuil prédéterminé, l'unité de contrôle considère qu'un phénomène de charge entraînante est détecté et effectue une étape 400. Sinon, le moteur retourne à l'étape 302.

A l'étape 304, l'unité de contrôle détermine si le moteur se trouve dans une phase de régulation. Par exemple, l'unité de contrôle détermine qu'une phase de régulation débute lorsqu'une phase d'accélération précédente se termine, autrement dit au moment où la vitesse réelle Vr atteint la vitesse de consigne Vc après qu'un ordre de démarrage a été reçu par le moteur. L'unité de contrôle considère en outre qu'une phase de régulation reste active tant qu'aucun ordre d'arrêt ou qu'aucun ordre de modification de la vitesse de consigne n'est reçu. Si c'est le cas, une étape 305 est effectuée. Sinon, le moteur retourne à l'étape 301.

A l'étape 305, l'unité de contrôle détermine si la vitesse réelle Vr est supérieure à la vitesse de consigne Vc. Pour cela, l'unité de contrôle détermine la vitesse réelle Vr à un instant t présent ou après écoulement du délai prédéterminé à compter d'une précédente détermination de la vitesse réelle Vr. L'unité de contrôle compare ladite vitesse réelle Vr à la vitesse de consigne Vc. Si la vitesse réelle Vr est supérieure à la vitesse de consigne Vc, une étape 306 est effectuée. Sinon, le moteur retourne à l'étape 304.

A l'étape 306, l'unité de contrôle détermine une tension d'alimentation moyenne réelle Ur. La tension d'alimentation moyenne Ur est par exemple obtenue par lecture du rapport cyclique réel du signal MLI. L'unité de contrôle compare ensuite la tension d'alimentation moyenne réelle Ur à une tension d'alimentation moyenne théorique Uth calculée. Ladite tension d'alimentation moyenne théorique Uth, correspondant par exemple à un rapport cyclique théorique du signal MLI, est calculée en prenant le rapport de la vitesse de consigne Vc sur la vitesse nominale du moteur, multiplié par un facteur correctif permettant de tenir compte d'une fluctuation de la tension d'alimentation générée par l'alimentation électrique du moteur et égal au rapport de la tension nominale sur la tension réelle courante de l'alimentation électrique du moteur, et multiplié par la résolution du signal MLI.

Si le rapport entre la tension d'alimentation moyenne réelle Ur et la tension d'alimentation moyenne théorique Uth est inférieur à un deuxième seuil prédéterminé S2, par exemple *S2 = 0,9*, l'unité de contrôle considère qu'un phénomène de charge entraînante est détecté et l'étape 400 est effectuée. Autrement dit, si *Ur/Uth < S2*, un phénomène de charge entraînante est détecté. Sinon, l'unité de contrôle retourne à l'étape 304.

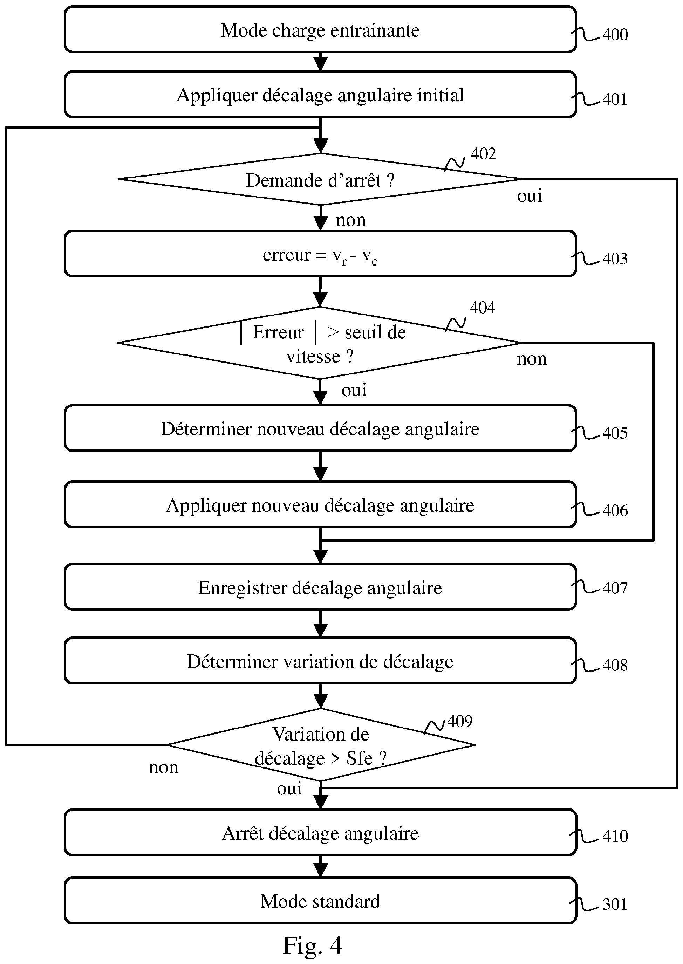

A l'étape 400, l'unité de contrôle passe du mode standard au mode ralentisseur. L'étape 400 est détaillée ci-après à la Fig. 4.

La Fig. 4 illustre ainsi schématiquement le procédé de régulation de la vitesse du moteur 103 dans le mode ralentisseur.

A l'étape 400, l'unité de contrôle considère qu'un phénomène de charge entraînante est détecté et passe dans le mode ralentisseur. Autrement dit, le mode ralentisseur est activé. L'unité de contrôle ajuste alors la tension d'alimentation moyenne à une tension d'alimentation nominale en réglant par exemple le rapport cyclique du signal MLI à 100%.

En outre, l'unité de contrôle détermine un seuil de fin d'entraînement Sfe. Le seuil de fin d'entraînement Sfe permet de détecter un arrêt du phénomène de charge entraînante. C'est par exemple le cas lorsqu'un objet entraîné, tel que le tablier ou volet roulant 106, atteint une position extrême et se retrouve entièrement abaissé ou fermé, lorsqu'un couple d'entraînement du tablier ou volet roulant 106 diminue en raison d'une réduction du diamètre d'enroulement du tablier ou volet roulant 106 autour du tube d'enroulement 104 ou lorsque des frottements augmentent et ralentissent alors le mouvement du tablier ou volet roulant 106. Le seuil de fin d'entraînement Sfe est une valeur d'angle prédéterminée. Selon un mode de réalisation particulier, le seuil de fin d'entraînement Sfe est égal à l'arrondi de la différence entre une valeur de tension prédéterminée U, autrement dit une valeur de tension nominale de l'alimentation électrique du moteur, et une valeur de tension d'alimentation mesurée Ui préalablement au démarrage du moteur, autrement dit la tension nominale à vide générée par l'alimentation électrique du moteur, à laquelle s'ajoute un angle prédéterminé β. Autrement dit, *Sfe = arrondi(U - Ui) + β*. Selon, un exemple, U = 12V et β = 9°.

Dans une étape 401 suivante, l'unité de contrôle effectue un freinage du moteur. Pour cela, l'unité de contrôle applique un décalage angulaire sur le champ magnétique du stator du moteur par rapport à une orientation du champ magnétique du stator optimale correspondant à la position angulaire courante du rotor du moteur et dans un sens opposé au sens de rotation du moteur. Autrement dit, lors de la rotation du rotor, chaque configuration d'alimentation des bobines du stator est exécutée avec un retard égal au décalage angulaire par rapport à la position d'un secteur angulaire du rotor associé à ladite configuration. Ainsi, l'application du décalage angulaire permet de freiner le moteur et de limiter le phénomène de charge entraînante tout en limitant la consommation de courant.

Le décalage angulaire initialement appliqué, dit décalage angulaire initial, est défini par une valeur angulaire initiale prédéterminée, par exemple 15°, et par un signe de sens opposé au sens de rotation du moteur. Par exemple, si le sens de rotation du moteur est positif, autrement dit si la vitesse du moteur est considérée positive, le décalage angulaire est de - 15°. Inversement, si le sens de rotation du moteur est négatif, autrement dit si la vitesse du moteur est considérée négative, le décalage angulaire est de + 15°.

Dans une étape 402 suivante, l'unité de contrôle détermine si un ordre d'arrêt a été reçu par le moteur. Si c'est le cas, une étape 410 est effectuée. Sinon, une étape 403 est effectuée.

A l'étape 403, l'unité de contrôle détermine la vitesse réelle Vr par mesure à un instant présent. Selon un mode de réalisation, la vitesse réelle Vr est déterminée après écoulement du délai prédéterminé à compter d'une précédente détermination de la vitesse réelle Vr. La vitesse réelle Vr est ainsi déterminée périodiquement, avec une période de la durée prédéterminée Δt, par exemple toutes les 100 ms.

En outre, l'unité de contrôle calcule un écart de vitesse égal à la différence entre la vitesse réelle Vr et la vitesse de consigne Vc, soit : *écart de vitesse = Vr - Vc.*

Dans une étape 404 suivante, l'unité de contrôle détermine si la valeur absolue de l'écart de vitesse est supérieure à un seuil de vitesse prédéterminé, par exemple un seuil de 20 tours/min. Si c'est le cas, l'unité de contrôle effectue une étape 405. Sinon, l'unité de contrôle effectue directement une étape 407.

A l'étape 405, l'unité de contrôle détermine une correction angulaire, homogène à une unité d'angle et égale à l'écart de vitesse divisé par un coefficient c de proportionnalité. L'unité de contrôle détermine ensuite un nouveau décalage angulaire en ajoutant la correction angulaire au décalage angulaire précédent. Si la somme calculée du décalage angulaire précédent et de la correction angulaire est supérieure en valeur absolue à une valeur angulaire maximale prédéterminée, le nouveau décalage angulaire est alors égal à ladite valeur angulaire maximale prédéterminée et de signe opposé au sens de la rotation du moteur. Par exemple, pour une valeur angulaire maximale prédéterminée de 30°, si la somme du décalage angulaire précédent et de la correction angulaire vaut -31°, alors le nouveau décalage angulaire est limité et est égal -30°.

Dans une étape 406 suivante, l'unité de contrôle applique le nouveau décalage angulaire en remplacement du décalage angulaire précédent. L'unité de contrôle effectue ensuite l'étape 407.

A l'étape 407, l'unité de contrôle enregistre la valeur courante du décalage angulaire, autrement dit la valeur du décalage angulaire effectivement appliqué.

La valeur courante du décalage angulaire est en outre enregistrée en association avec les *n* valeurs des décalages angulaires précédemment enregistrées, *n* étant un nombre prédéterminé, par exemple *n* = 14. Une valeur courante du décalage angulaire est enregistrée à chaque fois que l'unité de contrôle effectue l'étape 407. Dit autrement, à chaque nouvelle détermination de la vitesse réelle Vr correspond une valeur courante de décalage angulaire enregistrée. Ainsi, deux valeurs courantes successives de décalages angulaires enregistrées sont temporellement distantes de la période de durée prédéterminée Δt. La valeur courante du décalage angulaire correspond à la valeur du nouveau décalage angulaire déterminé à l'étape 405 précédente lorsque la valeur absolue de l'écart de vitesse est supérieure au seuil de vitesse prédéterminé à l'étape 404 et est identique à la valeur de décalage angulaire précédemment enregistrée sinon.

Un ensemble de *n+1* valeurs successives de décalages angulaires est ainsi constitué à l'étape 407, par exemple à l'aide d'une mémoire tampon circulaire de taille fixe comportant *n+1* éléments.

Dans une étape 408 suivante, l'unité de contrôle détermine une variation de décalage Δ$_D$. La variation de décalage Δ$_D$ est égale à la valeur absolue de la différence entre la somme des *m* valeurs des décalages angulaires en valeur absolue les plus anciennes et la somme des *m* valeurs des décalages angulaires en valeur absolue les plus récentes de l'ensemble des *n+1* valeurs, *m* étant un second nombre prédéterminé tel que *m < n/2*. Par exemple, pour *n = 14* et

$$m = 5 : \Delta_D = \left| \sum_{i=1}^{5}|\alpha_i| - \sum_{i=11}^{15}|\alpha_i| \right|$$ , avec

$\alpha_i$ étant les valeurs des décalages angulaires de l'ensemble des *n+1 = 15* valeurs, de rang *i* croissant dans un ordre chronologique.

Dans une étape 409 suivante, l'unité de contrôle compare la variation de décalage Δ$_D$ au seuil de fin d'entraînement Sfe. Si la variation de décalage Δ$_D$. est supérieure au seuil d'entraînement Sfe, l'étape 410 est effectuée. Sinon, l'unité de contrôle retourne à l'étape 402.

A l'étape 410, l'unité de contrôle arrête l'application du décalage angulaire. L'unité de contrôle effectue ensuite l'étape 301.

A l'étape 301 décrite précédemment à la Fig. 1, l'unité de contrôle considère qu'il n'y a plus de phénomène de charge entraînante et passe au mode standard.

**Revendications**

1. Procédé de régulation de la vitesse d'un moteur (103), le moteur (103) étant un moteur sans balai à courant continu et comportant un stator et un rotor, le moteur (103) étant destiné à entraîner en montée et en descente une charge mécanique (106), le procédé étant implémenté par une unité de contrôle (UC) du moteur (103) et **caractérisé en ce qu'**il comporte, lorsqu'un phénomène de charge entraînante est détecté, d'effectuer un freinage en appliquant (401) un décalage angulaire sur le champ magnétique du stator par rapport à une orientation du champ magnétique du stator optimale correspondant à la position angulaire courante du rotor, le décalage angulaire étant appliqué avec un sens opposé au sens de rotation du moteur.

2. Procédé selon la revendication 1, **caractérisé en ce qu'**il comporte un mode ralentisseur pouvant être alternativement activé et désactivé, le mode ralentisseur étant activé (400) dès qu'un phénomène de charge entraînante est détecté, et **en ce qu'**il comporte, lorsque le mode ralentisseur est désactivé (301), les étapes de :

- Déterminer une vitesse réelle du moteur,
- Déterminer si le moteur est dans une phase d'accélération (302) ou dans une phase de régulation (304),

- Détecter le phénomène de charge entraînante si le rapport de la vitesse réelle sur une vitesse théorique est supérieur à un premier seuil prédéterminé (303) lorsque le moteur est dans une phase d'accélération,
- Détecter le phénomène de charge entraînante si la vitesse réelle est supérieure à une vitesse de consigne (305) et si le rapport d'une tension d'alimentation moyenne réelle sur une tension d'alimentation moyenne théorique est inférieur à un deuxième seuil prédéterminé (306) lorsque le moteur est dans une phase de régulation.

3. Procédé selon la revendication 1 ou 2, **caractérisé en ce que** le décalage angulaire appliqué est égal à une valeur angulaire initiale prédéterminée au moment où le mode ralentisseur est activé, le procédé comportant en outre, lorsque le mode ralentisseur est activé (400), des étapes de :

   - Déterminer (403) un écart de vitesse égal à la différence entre une vitesse de consigne et la vitesse réelle,
   - Déterminer une valeur de correction égale à l'écart de vitesse divisé par un coefficient prédéterminé si la valeur absolue de l'écart de vitesse est supérieure à un seuil de vitesse prédéterminé (404),
   - Appliquer (406) un nouveau décalage angulaire calculé en ajoutant la valeur de correction au décalage angulaire précédent et limité en valeur absolue à une valeur angulaire maximale prédéterminée.

4. Procédé selon la revendication 3, **caractérisé en ce que** la vitesse réelle est déterminée périodiquement avec une période de durée prédéterminée et **en ce que** le procédé comporte en outre, lorsque le mode ralentisseur est activé :

   - Enregistrer (407), pour chaque vitesse réelle déterminée, une valeur du décalage angulaire appliqué,
   - Enregistrer chaque valeur de décalage angulaire appliqué en association avec les $n$ valeurs précédemment enregistrées des décalages angulaires appliqués, $n$ étant un premier nombre prédéterminé, de sorte à constituer un ensemble de $n+1$ valeurs,
   - Calculer (408), pour chaque ensemble de $n+1$ valeurs, une variation de décalage égale à la valeur absolue de la différence entre la somme des valeurs absolues des $m$ décalages angulaires les plus anciens de l'ensemble des $n+1$ valeurs et la somme des valeurs absolues des $m$ décalages angulaires les plus récents de l'ensemble des $n+1$ valeurs, $m$ étant un second nombre prédéterminé tel que $m < n/2$,

- Arrêter (410) l'application d'un décalage angulaire et désactiver le mode ralentisseur lorsque la variation de décalage est supérieure à un seuil de fin d'entraînement.

5. Procédé selon la revendication précédente, **caractérisé en ce que** le seuil de fin d'entraînement Sfe est égal à : $Sfe = arrondi(U - Ui) + \beta$, où U est une valeur de tension nominale de l'alimentation électrique du moteur, Ui est une valeur de tension d'alimentation mesurée préalablement au démarrage du moteur, et $\beta$ est un angle prédéterminé.

6. Procédé selon l'une des revendications 1 à 5, **caractérisé en ce que** le procédé comporte en outre d'arrêter (410) l'application du décalage angulaire et de désactiver le mode ralentisseur si un ordre d'arrêt (402) est reçu par le moteur.

7. Dispositif de régulation de la vitesse d'un moteur sans balai à courant continu, le moteur (103) comportant un stator et un rotor, le moteur étant destiné à entraîner en montée et en descente une charge mécanique, le dispositif étant **caractérisé en ce qu'**il comporte :

   - des moyens pour effectuer un freinage en appliquant (401) un décalage angulaire sur le champ magnétique du stator par rapport à une orientation du champ magnétique du stator optimale correspondant à la position angulaire du rotor avec un sens opposé au sens de rotation du moteur lorsqu'un phénomène de charge entraînante est détecté.

8. Dispositif de régulation selon la revendication précédente **caractérisé en ce qu'**il comporte en outre :

   - Des moyens pour activer (400) et désactiver (301) alternativement un mode ralentisseur, le mode ralentisseur étant activé dès qu'un phénomène de charge entraînante est détecté,
   - Des moyens pour déterminer une vitesse réelle du moteur,
   - Des moyens pour déterminer si le moteur est dans une phase d'accélération (302) ou dans une phase de régulation (304),
   - Des moyens pour détecter le phénomène de charge entraînante, lorsque le mode ralentisseur est désactivé, si le rapport de la vitesse réelle sur une vitesse théorique est supérieur à un premier seuil prédéterminé (303) lorsque le moteur est dans une phase d'accélération,
   - Des moyens pour détecter le phénomène de charge entraînante, lorsque le mode ralentisseur est désactivé, si la vitesse réelle est supérieure à une vitesse de consigne (305) et si le rapport d'une tension d'alimentation moyenne réelle sur une tension d'alimentation moyenne théorique est inférieur à un deuxième seuil prédéterminé (306) lorsque le moteur est dans une phase de régulation.

9. Programme d'ordinateur pouvant être stocké sur un support et/ou téléchargé d'un réseau de communication, afin d'être lu par un processeur, et **caractérisé en ce qu'**il comprend des instructions pour implémenter le procédé selon l'une des revendications 1 à 6, lorsque ledit programme est exécuté par le processeur.

10. Support de stockage d'informations stockant un programme d'ordinateur selon la revendication précédente.

Fig. 1

Fig. 2

Fig. 3

```
┌─────────────────────────────────────────────┐
│          Mode charge entrainante            │──400
└─────────────────────────────────────────────┘
                      │
                      ▼
┌─────────────────────────────────────────────┐
│      Appliquer décalage angulaire initial    │──401
└─────────────────────────────────────────────┘
                      │
                      ▼
           ╱────────────────────────╲  402
          ╱      Demande d'arrêt ?    ╲──────── oui
          ╲                          ╱
           ╲────────────────────────╱
                      │ non
                      ▼
┌─────────────────────────────────────────────┐
│               erreur = vᵣ - v_c              │──403
└─────────────────────────────────────────────┘
                      │
                      ▼
           ╱────────────────────────╲  404
          ╱   │ Erreur │ > seuil de  ╲──────── non
          ╲        vitesse ?         ╱
           ╲────────────────────────╱
                      │ oui
                      ▼
┌─────────────────────────────────────────────┐
│    Déterminer nouveau décalage angulaire     │──405
└─────────────────────────────────────────────┘
                      │
                      ▼
┌─────────────────────────────────────────────┐
│     Appliquer nouveau décalage angulaire     │──406
└─────────────────────────────────────────────┘
                      │
                      ▼
┌─────────────────────────────────────────────┐
│        Enregistrer décalage angulaire        │──407
└─────────────────────────────────────────────┘
                      │
                      ▼
┌─────────────────────────────────────────────┐
│        Déterminer variation de décalage      │──408
└─────────────────────────────────────────────┘
                      │
                      ▼
           ╱────────────────────────╲  409
   non ───╱      Variation de         ╲
          ╲     décalage > Sfe ?      ╱
           ╲────────────────────────╱
                      │ oui
                      ▼
┌─────────────────────────────────────────────┐
│           Arrêt décalage angulaire           │──410
└─────────────────────────────────────────────┘
                      │
                      ▼
┌─────────────────────────────────────────────┐
│                Mode standard                 │──301
└─────────────────────────────────────────────┘
```

Fig. 4

| | Europäisches Patentamt European Patent Office Office européen des brevets | **RAPPORT DE RECHERCHE EUROPEENNE** | Numéro de la demande<br>**EP 22 20 1005** |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2011 130548 A (ROHM CO LTD) 30 juin 2011 (2011-06-30) | 1-3,7-10 | INV. H02P3/08 |
| A | * le document en entier * | 4-6 | |
| A | WO 94/27359 A1 (SUNDSTRAND CORP [US]) 24 novembre 1994 (1994-11-24) * le document en entier * | 1-10 | |
| A | DAS DWIJASISH ET AL: "Development of BLDC Motor-Based Elevator System Suitable for DC Microgrid", IEEE/ASME TRANSACTIONS ON MECHATRONICS, IEEE SERVICE CENTER, PISCATAWAY, NJ, US, vol. 21, no. 3, 1 juin 2016 (2016-06-01), pages 1552-1560, XP011611213, ISSN: 1083-4435, DOI: 10.1109/TMECH.2015.2506818 [extrait le 2016-05-02] * le document en entier * | 1-10 | |

**DOMAINES TECHNIQUES RECHERCHES (IPC)**

H02P

Le présent rapport a été établi pour toutes les revendications

| Lieu de la recherche | Date d'achèvement de la recherche | Examinateur |
|---|---|---|
| Munich | 3 février 2023 | Fraïssé, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 20 1005

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-02-2023

| Document brevet cité au rapport de recherche | | Date de publication | Membre(s) de la famille de brevet(s) | | Date de publication |
|---|---|---|---|---|---|
| JP 2011130548 | A | 30-06-2011 | JP | 5650399 B2 | 07-01-2015 |
| | | | JP | 2011130548 A | 30-06-2011 |
| WO 9427359 | A1 | 24-11-1994 | EP | 0706728 A1 | 17-04-1996 |
| | | | EP | 0942521 A1 | 15-09-1999 |
| | | | JP | H08510374 A | 29-10-1996 |
| | | | US | 5430362 A | 04-07-1995 |
| | | | WO | 9427359 A1 | 24-11-1994 |

EPO FORM P0460

Pour tout renseignement concernant cette annexe : voir Journal Officiel de l'Office européen des brevets, No.12/82